# EUROPEAN PATENT APPLICATION

(11) **EP 4 524 171 A1**
(43) Date of publication of application: **19.03.2025**
(21) Application number: 23803671.9
(22) Date of filing: 03.03.2023
(51) Int. Cl.: C08F 232/06, C08F 8/04, C09J 147/00

(54) **HYDROGENATED DICYCLOPENTADIENE BASED RESIN, PREPARATION METHOD THEREOF, AND COMPOSITION FOR TACKIFIER OR ADHESIVE COMPRISING SAME**

(30) Priority: 11.05.2022 KR 20220057792; 02.03.2023 KR 20230027510
(71) Applicant: Hanwha Solutions Corporation, Jung-gu Seoul 04541 (KR)
(72) Inventor: KANG, Paul, Daejeon 34128 (KR); LEE, Chulwoong, Daejeon 34128 (KR); LEE, Jinho, Daejeon 34128 (KR)
(74) Representative: Berggren Oy
(86) International application number: PCT/KR2023/002943
(87) International publication number: WO 2023/219243

(57) **Abstract**

The present disclosure relates to hydrogenated dicyclopentadiene based resin that comprises biobased materials, and thus, is environmentally friendly and simultaneously has excellent properties including heat resistance, tackifying/adhesion property, and the like, a preparation method thereof, and a composition for tackifier or adhesive comprising the same.

## Description

### [Technical Field]

### Cross-reference to Related Applications

This application claims the benefit of Korean Patent Application No. 10-2022-0057792 filed on May 11, 2022 and Korean Patent Application No. 10-2023-0027510 filed on March 2, 2023 with the Korean Intellectual Property Office, the disclosures of which are herein incorporated by reference in their entirety.

The present disclosure relates to hydrogenated dicyclopentadiene based resin that is environmentally friendly and has excellent tackification/adhesion property, a preparation method thereof, and a composition for tackifier or adhesive comprising the same.

### [Background Art]

Dicyclopentadiene (DCPD) based resin, a kind of petroleum resin, is resin polymerized from monomer components comprising dicyclopentadiene, and hydrogenated dicyclopentadiene based resin is mixed with various polymers such as amorphous polyalphaolefin (APAO), ethylenevinyl acetate (EVA), styrenic block copolymers (SBCs), and the like and used as tackifying resin of tackifier or adhesive. Wherein various properties are required according to the kind and use of tackifier or adhesive, and to meet these requirements, research and development has been actively progressed.

Meanwhile, to solve carbon dioxide discharge, petroleum resource depletion, and plastic waste disposal problems, development of polymer materials based on biomass instead of materials derived from petroleum resources has been conducted. With such a tendency of development of environmentally friendly resin, there is a demand for development of biomass-based petroleum resin having excellent properties, capable of replacing petroleum resin previously used for tackifier or adhesive.

### [Disclosure of Invention]

### [Technical Problem]

It is an object of the invention to provide hydrogenated dicyclopentadiene based resin that comprises biobased materials, and thus, is environmentally friendly and simultaneously has excellent properties including heat resistance, tackification/adhesion property, and the like, a preparation method thereof, and a composition for tackifier or adhesive comprising the same.

### [Technical Solution]

To achieve the object, according to one embodiment of the invention, there is provided hydrogenated dicyclopentadiene based resin obtained by polymerization of a monomer mixture comprising dicyclopentadiene and vegetable oil, and hydrogenation.

The vegetable oil may be represented by the following Chemical Formula 1: 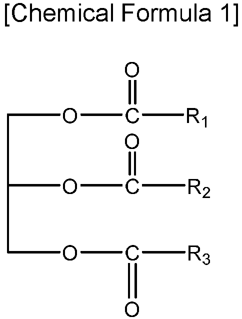 in the Chemical Formula 1,
R₁ to R₃ are each independently, C5-20 alkyl, and at least one of the R₁ to R₃ comprises one or more carbon-carbon double bonds.

The content of the vegetable oil in the monomer mixture may be 5 wt% to 20 wt%.

The monomer mixture may comprise dicyclopentadiene and vegetable oil at a weight ratio of 19:1 to 3:1.

The vegetable oil may have unsaturated fatty acid content of 60 wt% to 90 wt%, in fatty acid.

The hydrogenated dicyclopentadiene based resin according to one embodiment may have an oxygen content of 0.1 wt% to 5 wt%.

The hydrogenated dicyclopentadiene based resin may have a softening point of 70 °C to 120 °C.

The hydrogenated dicyclopentadiene based may have heating loss of 3.5% or less.

The hydrogenated dicyclopentadiene based resin may have a diacetone alcohol cloud point of 105 °C or less, and mixed methylcyclohexane-aniline point of 75 °C or less.

According to another embodiment of the invention, there is provided a method for preparing hydrogenated dicyclopentadiene based resin comprising steps of: subjecting a monomer mixture comprising dicyclopentadiene and vegetable oil to thermal polymerization to prepare polymerized dicyclopentadiene based resin; and subjecting the polymerized dicyclopentadiene based resin to a hydrogenation.

In the preparation method, the content of dicyclopentadiene in the monomer mixture may be 80 to 95 wt%, and the content of vegetable oil may be 5 wt% to 20 wt%.

The step of preparing the polymerized dicyclopentadiene based resin may comprise: a first polymerization stage wherein the monomer mixtures is subjected to thermal polymerization in a continuous stirred tank reactor (CSTR); and a second polymerization stage wherein the reaction product of the first stage polymerization is subjected to thermal polymerization in a plug flow reactor (PFR).

Further, according to another embodiment of the invention, there provided a composition for tackifier or adhesive comprising the hydrogenated dicyclopentadiene based resin.

### [Effects]

Since the hydrogenated dicyclopentadiene based resin of the present disclosure comprises biobased materials, and thus, is environmentally friendly and simultaneously has excellent properties of heat resistance, tackification/adhesion property, it can be used usefully as tackifying resin of a composition for tackifier or adhesive.

### [Brief Description of Drawings]

Fig. 1 shows the SAFT (Shear Adhesion Failure Temperature) measurement results of EVA hot melt adhesive prepared using each resin of Examples 1 to 4 and Comparative Examples 1 to 12.
Fig. 2 shows the SAFT measurement results of mPO hot melt adhesive prepared using each resin of Examples 1 to 4 and Comparative Examples 1 to 12.

### [Best Mode for Carrying Out the Invention]

As used herein, the term 'dicyclopentadiene based resin' or 'polymerized dicyclopentadiene based resin' means polymerized resin comprising dicyclopentadiene as monomers, and 'hydrogenated dicyclopentadiene based resin' means resin obtained by subjecting the dicyclopentadiene based resin to hydrogenation, i.e., a hydrogen addition.

Further, the term 'hydrogenation' or 'hydrogen addition' means a reaction of adding hydrogen to an unsaturated bond such as double bond to convert it to a single bond.

Further, the term 'monomer mixture' means a cluster of monomers in which a solvent or additive is not included.

Further, the term 'tackifier or adhesive' is used to include both a tackifier and an adhesive.

Throughout the specification, terms "a first", "a second" and the like are used to explain various constructional elements, and they are used only to distinguish one constructional element from other constructional elements.

Further, the terms used herein are only to explain specific embodiments, and are not intended to limit the invention. A singular expression includes a plural expression thereof, unless the context clearly indicates otherwise. Throughout the specification, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

Although various modifications can be made to the invention and the invention may have various forms, specific examples will be illustrated and explained in detail below. However, it should be understood that it is not intended to limit the invention to specific disclosure, and that the invention includes all the modifications, equivalents or replacements thereof without departing from the spirit and technical scope of the invention.

Hereinafter, hydrogenated dicyclopentadiene based resin, a preparation method thereof, and a composition for tackifier or adhesive comprising the same according to the invention will be explained in detail.

The hydrogenated dicyclopentadiene based resin according to one embodiment of the invention is obtained by polymerization of a monomer mixture comprising dicyclopentadiene and vegetable oil, and hydrogenation. Thus, the hydrogenated dicyclopentadiene based resin comprises moieties derived from dicyclopentadiene and moieties derived from vegetable oil. Although the dicyclopentadiene and vegetable oil comprise unsaturated bonds, while these monomers pass though polymerization and hydrogenation, at least a part of the unsaturated bonds included in the monomers may be converted to saturated bonds. Thus, the moieties derived from dicyclopentadiene included in the hydrogenated dicyclopentadiene based resin and the moieties derived from the vegetable oil may respectively comprise unsaturated bonds, or may not comprise unsaturated bonds.

The inventors of the present disclosure tried to develop hydrogenated dicyclopentadiene based resin comprising biobased materials following recent tendencies of environment protection and development of environmentally friendly resin, and as the result, conducted polymerization using vegetable oil as comonomers with dicyclopentadiene, and confirmed that hydrogenated dicyclopentadiene based resin prepared by subjecting the obtained polymer to hydrogenation has properties equivalent to or more excellent that the existing dicyclopentadiene based resin, and completed the invention.

The hydrogenated dicyclopentadiene based resin according to one embodiment of the invention exhibits superior heat resistance compared to the existing dicyclopentadiene based resin, and thus, it can be used usefully as environmentally friendly tackifying resin in a composition for tackifier or adhesive in need of high heat resistance.

The dicyclopentadiene is used as main monomers, and commercial products having a purity of 75% or more, or 80% or more may be used.

The vegetable oil is triglyceride comprising unsaturated fatty acid, derived from plants. Specifically, the vegetable oil may be represented by the following Chemical Formula 1: 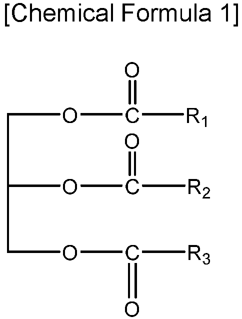 in the Chemical Formula 1,
R₁ to R₃ are each independently, C5-20 alkyl, and at least one of the R₁ to R₃ comprises one or more carbon-carbon double bonds.

Although the kind of the vegetable oil is not specifically limited, for example, vegetable oils having unsaturated fatty acid content in fatty acid, of 60 wt% or more, or 70 wt% or more, and 90 wt% or more, may be used. Further, two or more kinds of vegetable oils may be used in combination as comonomers.

Specifically, the vegetable oil may be one or more selected from the group consisting of soybean oil, safflower oil, sunflower oil, walnut oil, corn oil, sesame oil, and peanut oil, but is not limited thereto, and various kinds of vegetable oils widely known may be used as comonomers for preparing hydrogenated dicyclopentadiene based resin according to one embodiment of the invention.

Meanwhile, based on 100 wt% of the monomer mixture, the content of the vegetable oil may be 5 wt% or more, or 10 wt% or more, and 20 wt% or less, or 15 wt% or less. Thus, in the hydrogenated cyclopentadiene based resin, moieties derived from vegetable oil may be 5 wt% or more, or 10 wt% or more, and 20 wt% or less, or 15 wt% or less. If the content of the moieties derived from vegetable oil is less than 5 wt% in the hydrogenated cyclopentadiene based resin, it may be difficult to regard the hydrogenated dicyclopentadiene based resin prepared as biobased resin, and if it is greater than 20 wt%, the softening point of the hydrogenated dicyclopentadiene based resin prepared may be lowered, and thus, although it may be suitable as liquid petroleum resin, it may not suitable as general-purpose petroleum.

According to one embodiment, the monomer mixture may comprise dicyclopentadiene and vegetable oil at a weight ratio of 19:1 to 3:1. Thus, the weight ratio of the moieties derived from dicyclopentadiene and the moieties derived from vegetable oil may be 19:1 to 3:1.

If the ratio of dicyclopentadiene is too high, the ratio of the moieties derived from vegetable oil in hydrogenated dicyclopentadiene based resin may decrease, and thus, it may not serve as biobased resin. To the contrary, if the ratio of vegetable oil is too high compared to dicyclopentadiene, the softening point of hydrogenated dicyclopentadiene based resin may be lowered, and thus, although it may be used as liquid petroleum resin, it may be difficult to utilize as general-purpose petroleum resin. In this regard, to prepare hydrogenated dicyclopentadiene based resin suitable as general-purpose petroleum resin, the weight ratio of dicyclopentadiene and vegetable oil may be 17:1 to 3:1, or 16:1 to 3:1, and thus, the weight ratio of the moieties derived from dicyclopentadiene and the moieties derived from vegetable oil may be 17:1 to 3:1, or 16:1 to 3:1.

The monomer mixture for preparation of the hydrogenated dicyclopentadiene based resin according to one embodiment of the invention may not further comprise other monomers, in addition to dicyclopentadiene and vegetable oil. That is, the hydrogenated dicyclopentadiene based resin may comprise only the moieties derived from dicyclopentadiene and the moieties derived from vegetable oil.

Alternatively, the monomer mixture may further comprise comonomers in addition to dicyclopentadiene and vegetable oil. It is preferable that the content of the additional comonomers may be 30 wt% or less, or 20 wt% or less, based on 100wt% of the mixture. Thus, the hydrogenated dicyclopentadiene based resin may comprise the moieties derived from additional comonomers in the content of 30 wt% or less, or 20 wt% or less.

As the additional comonomers, comonomers conventionally used for the preparation of dicyclopentadiene based resin may be used without limitations, and for example, piperylene (PIP), styrene, or a combination thereof may be used.

Although the weight average molecular weight (Mw) of the hydrogenated dicyclopentadiene based resin is not specifically limited, it may be, for example, 400 g/mol or more, or 500 g/mol or more, or 600 g/mol or more, or 650 g/mol or more, and 2000 g/mol or less, 1800 g/mol or less, 1600 g/mol or less, or 1500 g/mol or less.

Further, the polydispersity index (PDI) of the hydrogenated dicyclopentadiene based resin may be, for example, 1.0 or more, or 1.3 or more, or 1.5 or more, and 3.0 or less, 2.7 or less, or 2.5 or less.

The weight average molecular weight (Mw) and polydispersity index of the hydrogenated dicyclopentadiene based resin may be measured using gel permeation chromatograph (GPC), as embodied in the following experimental examples.

As the hydrogenated dicyclopentadiene based resin is prepared using vegetable oil as comonomers, it may meet an oxygen content of 0.1 wt% or more. Specifically, the oxygen content of the hydrogenated dicyclopentadiene based resin may be 0.1 wt% or more, 0.3 wt% or more, or 0.4 wt% or more, and 5 wt% or less, 3 wt% or less, 2.7 wt% or less.

As such, since the hydrogenated dicyclopentadiene based resin according to one embodiment of the invention exhibits higher oxygen content compared to the existing dicyclopentadiene based resin, it may exhibit more excellent solubility to a polar solvent, and have improved compatibility with a polar substrate.

The hydrogenated dicyclopentadiene based resin may have a softening pointof 70 °C or more, 80 °C or more, or 90 °C or more, and 120 °C or less, 110 °C or less, or 105 °C or less. When the hydrogenated dicyclopentadiene based resin meets the above softening point range, it can be used suitably as general-purpose hot melt adhesive.

Further, the hydrogenated dicyclopentadiene based resin exhibits excellent heating loss of 3.5% or less, preferably it meets heating loss of 3.2% or less, or 3.0% or less. As heating loss is lower, it is more excellent, and theoretically, it may be 0%.

The hydrogenated dicyclopentadiene based resin exhibits excellent solubility to a solvent.

Specifically, the hydrogenated dicyclopentadiene based resin may meet diacetone alcohol cloud point (DACP) of 105 °C or less, 104 °C or less, or 102 °C or less, and 60 °C or more, 70 °C or more, or 80 °C or more.

Further, the hydrogenated dicyclopentadiene based resin may meet mixed methylcyclohexane-aniline point (MMAP) of 75 °C or less, or 72 °C or less, or 71 °C or less, and 50 °C or more, or 60 °C or more.

The measurement method of oxygen content, softening point, heating loss, diacetone alcohol cloud point, and mixed methylcyclohexane-aniline point will be specifically explained in the following experimental examples.

The aforementioned hydrogenated dicyclopentadiene based resin may be prepared by a preparation method comprising steps of: subjecting a monomer mixture comprising dicyclopentadiene and vegetable oil to thermal polymerization to prepare polymerized dicyclopentadiene based resin; and subjecting the polymerized dicyclopentadiene based resin to hydrogenation.

The vegetable oil included in the monomer mixture is as explained above.

The monomer mixture may not further comprise other monomers, in addition to dicyclopentadiene and vegetable oil. In this case, the content of dicyclopentadiene in the monomer mixture may be 80 to 95 wt%, and the content of vegetable oil may be 5 wt% to 20 wt%. Alternatively, based on 100 wt% of the monomer mixture, the content of dicyclopentadiene may be 80 to 95 wt%, and the content of vegetable oil may be 10 wt% to 15 wt%.

Alternatively, the monomer mixture may further comprise additional comonomers in addition to dicyclopentadiene and vegetable oil, wherein the additional comonomers and the amount used are as explained above.

The monomer mixture may be added to thermal polymerization while being dissolve in a solvent, namely, as a monomer composition. The solvent that can be used in the preparation of the monomer composition is not specifically limited, and for example, one or more selected from the group consisting of pentane, hexane, heptane, nonane, decane, benzene, toluene, and xylene may be used.

Further, the monomer composition may further comprise additives commonly used in the technical field to which the invention pertains, such as an antioxidant, a polymerization inhibitor, and the like.

Although a method for the thermal polymerization of the monomer mixture comprising dicyclopentadiene and vegetable oil is not specifically limited, for example, it may be prepared by a method comprising a) a first polymerization stage wherein the monomer mixtures is subjected to thermal polymerization in a continuous stirred tank reactor (CSTR); and b) a second polymerization stage wherein the reaction product of the first stage polymerization is subjected to thermal polymerization in a plug flow reactor (PFR). Wherein, the monomer mixture may be used in the form of a monomer composition dissolved in a solvent.

A such, in case thermal polymerization is conducted in two stages, polymerization heat may be controlled, and conversion rate or polymerization rate of monomer may be remarkably improved, and dicyclopentadiene based resin having narrow molecular weight distribution and the resulting uniform properties may be provided.

The reaction temperature (T₁) in the step a) may be 210 to 270 °C, or 220 to 270 °C. If polymerization is conducted at the above reaction temperature range, conversion rate or polymerization rate of monomers may be excellent, and side reactions such as crosslinking may be inhibited.

The reaction pressure in the step a) may be 1 to 40 bar, or 5 to 35 bar, or 10 to 30 bar. If polymerization is conducted under the above reaction pressure, reactivity of monomers may be increased without generating safety accident.

The reaction time in the step a) may be set to 10 to 90 minutes, or 20 to 80 minutes, or 30 to 70 minutes. If the reaction time is too short, inhibition of side reactions due to mixing of raw materials may be insufficient, and if the reaction time is too long, productivity of the final resin may decrease, and molecular weight distribution may become wide, and thus, it is preferable that the reaction time is controlled to the above-explained range.

The reaction temperature(T₂) in the step b) may be in the range of ±30 °C of the reaction temperature (T₁) in the step a), namely T₁-30 °C to T₁+30 °C, or T₁-20 °C to T₁+20 °C, or T₁-15 °C to T₁+15 °C. If polymerization is conducted at the above reaction temperature range, side reactions may be inhibited, and productivity may be increased.

Further, by controlling temperature difference between the step a) and the step b) within ±30 °C, generation of unreacted oligomers may be minimized, and dicyclopentadiene based resin with narrow molecular weight distribution may be prepared.

The reaction pressure in the step b) may be 1 to 40 bar, or 5 to 35 bar, or 10 to 30 bar. If the reaction pressure is too low, reactivity may be low due to vaporized monomers, and if the pressure is too high, a risk of safety accident may be high during the process, and thus, it is preferable that the reaction pressure is controlled to the above explained range.

The reaction time in the step b) may be 1 to 4 times, or 1 to 3 times, or 1 to 2 times of the reaction time in the step a). If the reaction time is too short compared to the reaction time of the step a), the reaction may not be sufficiently progressed, and if the reaction time is too long, side reactions may be generated, and thus, it is preferable that the reaction time is controlled to the above explained range.

Further, the internal volume of the PFR used in the polymerization of step b) may be set to 1 to 3 times, or 1 to 2.5 times, or 1 to 2 times of the internal volume of the CSTR used in the polymerization of step a). If the internal volume of the PRF is too small compared to the internal volume of the CSTR, polymerization in the PFR may not sufficiently progress, and thus, a large quantity of impurities such as wax may remain, and if the internal volume of the PFR is too large compared to the internal volume of the CSTR, the effect of applying CSTR may be insignificant, and thus, control of the initial reaction heat may be insufficient, and it may be difficult to control the reaction temperature, and thus, it is preferable that the internal volume of the PFR is controlled to the above range.

The hydrogenation, or hydrogenation addition is not specifically limited, and may be conducted according to any method known in the art. The hydrogenation is a reaction of adding hydrogen to unsaturated bonds such as double bonds to convert to single bonds, and through the hydrogenation, hydrogenated dicyclopentadiene based resin may be obtained from polymerized dicyclopentadiene based resin.

The hydrogenation may be performed according to the method known in the art. For example, hydrogenation may be performed by adding polymerized dicyclopentadiene based resin obtained in a continuous hydrogenation reactor packed with a hydrogenation catalyst.

The hydrogenation catalyst is not specifically limited, and any hydrogenated catalyst known in the art may be used. Specifically, one or more selected from the group of Ni, Fe, Cu, Co, Mo, Pd, Rh, Pt, Nb, Au, Rd, and Raney Ni may be used as the hydrogenation catalyst.

The hydrogenation catalyst may be used in the content of 0.1 parts by weight or more, or 0.3 parts by weight or more, or 0.5 parts by weight or more, and 1.0 parts by weight or less, or 0.8 parts by weight or less, based on 100 parts by weight of the polymerized dicyclopentadiene based resin to improve reactivity, but the content is not limited thereto.

The hydrogenation conditions are not specifically limited, and it may be conducted, for example, at 150 to 300 °C under pressure of 50 to 150 bar. In case hydrogenation is conducted under the above pressure and temperature, destruction of a molecular structure may be prevented.

Further, hydrogen gas may be continuously added so that the reaction pressure may be constantly maintained during hydrogenation.

The above-explained hydrogenated dicyclopentadiene based resin may be used as hot melt adhesive or pressure sensitive adhesive, and the like, or it may be mixed with various base resin, for example, one or more base resin selected from the group consisting of ethylene-vinyl acetate resin, polyolefin-based resin, polyester based resin, styrene based resin, polyamide based resin, and ethylene-acryl based resin, and used as adhesive or tackfier. Further, it may serve as tackifying or adhesive resin in ink, pant, road marking paint, and the like.

Hereinafter, the actions and effects of the invention will be explained in more detail through specific examples of the invention. However, these examples are presented only as the illustrations of the invention, and the scope of the right of the invention is not determined thereby.

### [Example]

### Example 1

1425 g of dicyclopentadiene (purity 80 %), and 75 g of soybean oil were mixed with 1500 g of a xylene solvent to prepare a monomer composition.

While continuously feeding the monomer composition to a continuous stirred tank reactor (CSTR, internal volume: 0.416 L), first stage polymerization (reaction time: 43 minutes) was conducted under temperature of 265°C and pressure of 25 bar.

While continuously feeding the reaction product of the first stage polymerization to a plug flow reactor (PFR, internal volume: 0.590 L) connected with the CSTR, second stage polymerization (reaction time: 67 minutes) was conducted under temperature of 278 °C and pressure of 25 bar.

The polymerized product was decompressed at 260 °C for 30 minutes and polymerized dicyclopentadiene based resin was recovered.

The polymerized dicyclopentadiene based resin was fed to a fixed bed reactor of 1.5 m length, packed with 0.5 wt% of heterogeneous palladium catalyst, based on 100 wt% of the polymerized dicyclopentadiene based resin, and subjected to hydrogenation at a reaction temperature of 250 °C, a reaction pressure of 100 bar, raw material flow rate of 40 ml/min, and hydrogen flow rate of 4 NMPL to prepare hydrogenated dicyclopentadiene based resin.

### Example 2

Polymerized dicyclopentadiene based resin and hydrogenated dicyclopentadiene based resin were prepared by the same method as Example 1, except that 1350 g of dicylopentadiene, and 150 g of soybean oil were used as monomers, and CSTR reaction temperature was set to 270 °C and PFR reaction temperature was set to 280 °C.

### Example 3

Polymerized dicyclopentadiene based resin and hydrogenated dicyclopentadiene based resin were prepared by the same method as Example 1, except that 1275 g of dicylopentadiene, and 225 g of soybean oil were used as monomers, and CSTR reaction temperature was set to 270 °C and PFR reaction temperature was set to 280 °C.

### Example 4

Polymerized dicyclopentadiene based resin and hydrogenated dicyclopentadiene based resin were prepared by the same method as Example 1, except that 1200 g of dicylopentadiene, and 300 g of soybean oil were used as monomers, and CSTR reaction temperature was set to 275 °C and PFR reaction temperature was set to 280 °C.

The oxygen content(wt%) of each hydrogenated dicyclopentadiene based resin prepared in Examples 1 to 4 was measured, and the results were shown in the following Table 1. Further, for each hydrogenated dicyclopentadiene based resin, infrared spectrometry (IR) was conducted.

**[Table 1]**

| | Soybean oil input (wt%) | Soybean oil input mole number(mol) | Expected oxygen content (wt%) | Oxygen content(wt %) of hydrogenated resin |
|---|---|---|---|---|
| Example1 | 5 | 0.005 | 0.644 | 0.447 |
| Example2 | 10 | 0.011 | 1.273 | 1.165 |
| Example3 | 15 | 0.016 | 1.886 | 1.856 |
| Example4 | 20 | 0.022 | 2.484 | 2.649 |

As the results of IR analysis of each hydrogenated dicyclopentadiene based resin of Examples 1 to 4, a peak derived from the carbonyl group of vegetable oil was confirmed at 1745 cm⁻¹. Further, as the results of measuring the actual oxygen content of the hydrogenated dicyclopentadiene based resin, it was confirmed to be similar to the expected oxygen content calculated from the soybean oil input.

From these results, it can be confirmed that vegetable oil (soybean oil) was polymerized together with DCPD as comonomers and included in the polymer chain.

### Comparative Example 1

HC-100 (Hanwha solutions) was used as Comparative Example 1.

### Comparative Example 2

HC-120 (Hanwha solutions) was used as Comparative Example 2.

### Comparative Example 3

95 parts by weight of HC-100 (Hanwha solutions) and 5 parts by weight of soybean oil were mixed and used as Comparative Example 3.

### Comparative Example 4

85 parts by weight of HC-100 (Hanwha solutions) and 15 parts by weight of soybean oil were mixed and used as Comparative Example 4.

### Comparative Example 5

75 parts by weight of HC-100 (Hanwha solutions) and 25 parts by weight of soybean oil were mixed and used as Comparative Example 5.

### Comparative Example 6

95 parts by weight of HC-120 (Hanwha solutions) and 5 parts by weight of soybean oil were mixed and used as Comparative Example 6.

### Comparative Example 7

85 parts by weight of HC-120 (Hanwha solutions) and 15 parts by weight of soybean oil were mixed and used as Comparative Example 7.

### Comparative Example 8

75 parts by weight of HC-120 (Hanwha solutions) and 25 parts by weight of soybean oil were mixed and used as Comparative Example 8.

### Comparative Example 9

Soybean oil was fed to a fixed bed reactor of 1.5 m length, packed with heterogeneous palladium catalyst (0.5 wt%, based on 100 wt% of the polymerized dicyclopentadiene based resin), and subjected to hydrogenation at a reaction temperature of 250 °C, a reaction pressure of 100 bar, raw material flow rate of 40 ml/min, and hydrogen flow rate of 4 NMPL to prepare hydrogenated soybean oil.

85 parts by weight of HC-100 (Hanwha solutions) and 15 parts by weight of the hydrogenated soybean oil were mixed and used as Comparative Example 9.

### Comparative Example 10

Hydrogenated soybean oil was prepared by the same method as Comparative Example 9, and 75 parts by weight of HC-100 (Hanwha solutions) and 25 parts by weight of the hydrogenated soybean oil were mixed and used as Comparative Example 10.

### Comparative Example 11

Hydrogenated soybean oil was prepared by the same method as Comparative Example 9, and 85 parts by weight of HC-120 (Hanwha solutions) and 15 parts by weight of the hydrogenated soybean oil were mixed and used as Comparative Example 11.

### Comparative Example 12

Hydrogenated soybean oil was prepared by the same method as Comparative Example 9, and 75 parts by weight of HC-120 (Hanwha solutions) and 25 parts by weight of the hydrogenated soybean oil were mixed and used as Comparative Example 11.

### Experimental Example

### (1) Softening point

The softening point of each resin was measured twice using Anton Paar RKA5 equipment according to ASTM E 28, and the mean value was calculated and described in the Table 1.

### (2) Molecular weight

Weight average molecular weight (polystyrene conversion, Mw), number average molecular weight (Mn), and Z-average molecular weight (Mz) were measured by gel permeation chromatography (GPC) (Viscotek TDA302 and Agilent 1200 series (Pump)).

The resin to be measured was dissolved in tetrahydofuran to a concentration of 4000 pm and 100 µ | of the solution was injected in GPC. Tetrahyfrofuran was used as the mobile phase of GPC, and inflowed at the flow rate of 1.0 mL/min, and the analysis was conducted at 35 °C. As a column, Agilent PL Mixed C 2 set + PL 50Å was used. As a detector, RI detector (Viscotek RI) was used to measure at 35 °C. Using a calibration curve formed after measuring polystyrene standard, Mw, Mn, and Mz values were derived. As the polystyrene standard, 12 kinds with molecular weights of 104 / 118 / 236 / 580 / 1480 / 2340 / 2970 / 5030 / 8450 / 10850 / 20650 / 24600 were used.

Wherein, PDI (polydispersity index) was calculated by dividing the weight average molecular weight measured by the number average molecular weight.

### (3) Heating loss

3 g of the resin was added to heating loss analyzer (AND MX-50) and heated at 180 °C for 1 hour. The weight change before and after heating was converted to percentage to calculate heating loss.

### (4) Melt viscosity (ASTM D 3236)

Using Brookfield DV-III viscometer, the viscosity of the resin was measured at 180 °C.

### (5) Diacetone Alcohol Cloud Point (DACP)

A mixed solution of 5 g of the resin, 5 g of xylene, and 5 g of diacetone alcohol was prepared. The solution was heated until it became transparent, and then, while cooling the solution, a temperature at which the solution turned cloudy was measured to obtain DACP.

### (6) Mixed Methylcyclohexane-Aniline Point (MMAP)

A mixed solution of 5 g of the resin, 5 g of methylcyclohexane, and 5 g of aniline was prepared. The solution was heated until it became transparent, and then, while cooling the solution, a temperature at which the solution turned cloudy was measured to obtain MMAP.

### (7) Shear Adhesion Failure Temperature (SAFT)

Base resin; each resin of Comparative Examples and Examples; and Fischer-Tropsch Waxes were mixed at a mixing ratio of 4:4:2 to prepare hot melt adhesive (HMA). Thereafter, it was manufactured into a HMA film having a constant thickness through a hot press (QM900A, Qmesys Corporation), and then, the manufactured film was cut to a square of 2.5*2.5 cm and bonded to a B type corrugated cardboard made of KLB to manufacture a SAFT measurement sample.

While applying a load of 500 g to the manufactured SAFT sample using a SAFT measuring apparatus (Elastocon Corporation, ES-07ll), a temperature was raised by 1 °C every 2 minutes, and a temperature at which HMA lost adhesion and the sample was separated was measured.

As the base resin, EVA1529 (Hanwha solutions) was used for EVA hot melt adhesive, and GA1900 (DOW Corporation) was used for mPO hot melt adhesive.

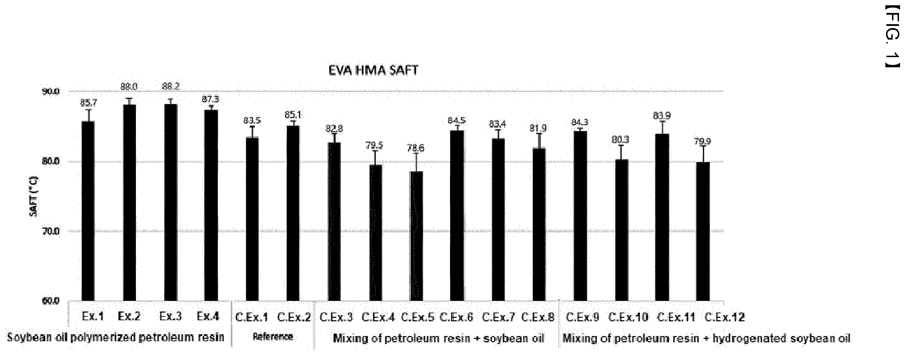

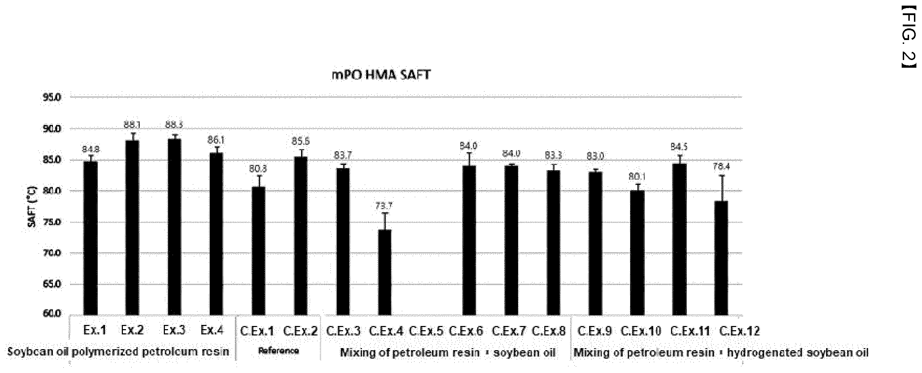

The SAFT measurement result of EVA hot melt was shown in Fig. 1, and the SAFT measurement result of mPO hot melt was shown in Fig. 2. Meanwhile, the resin of Comparative Example 5 was sticky and semi-solid state when mPO was used as base resin, and thus, mPO hot adhesive could not be manufactured.

**[Table 2]**

| | | Comparative Example 1 | Comparat ive Example 2 | Example 1 | Example 2 | Example 3 | Example 4 |
|---|---|---|---|---|---|---|---|
| Basic properties | Softenin g point(°C ) | 103.4 | 120.3 | 102.8 | 102 | 92.45 | 72.9 |
| | Mw | 526 | 591 | 698 | 1227 | 1341 | 1427 |
| | Mn | 368 | 401 | 400 | 526 | 567 | 584 |
| | Mz | 2019 | 1611 | 3124 | 3866 | 3986 | 4179 |
| | PDI | 1.356 | 1.474 | 1.75 | 2.33 | 2.367 | 2.446 |
| | Heating loss(%) | 2.54 | 1.3 | 3.15 | 2.25 | 2.15 | 3.06 |
| | Melt viscosity (@180° C) | 202.2 | 762.1 | 260 | 616 | 411 | 128 |
| Compatibi lity | DACP(° C) | 69.8 | 80.6 | 81 | 103.2 | 101.7 | 93.5 |
| | MMAP(° C) | 66.4 | 68.5 | 67.2 | 71.8 | 70.8 | 64.5 |

**[Table 3]**

| | | Compa rative Exampl e 3 | Compa rative Exampl e 4 | Compa rative Exampl e 5 | Compa rative Exampl e 6 | Compa rative Exampl e 7 | Compa rative Exampl e 8 |
|---|---|---|---|---|---|---|---|
| Basic properti es | Heating loss(%) | 8.46 | 7.57 | 6.31 | 12.11 | 6.42 | 6.15 |
| | Melt viscosity(@180 °C) | 175 | 76.16 | 38.24 | 357 | 203 | 67.19 |
| Compati bility | DACP(°C) | 53.2 | 53.5 | 46.5 | 69.2 | 72.3 | 51.5 |
| | MMAP(°C) | 58.1 | 53.4 | 50.6 | 60.9 | 58.9 | 70.3 |

**[Table 4]**

| | | Comparati ve Example 9 | Comparati ve Example 10 | Comparati ve Example 11 | Comparati ve Example 12 |
|---|---|---|---|---|---|
| Basic properties | Heating loss(%) | 3.54 | 3.26 | 3.4 | 2.3 |
| | Melt viscosity(@180° C) | 222 | 83.14 | 513 | 151 |
| Compatibili ty | DACP(°C) | 57.6 | 50.5 | 73.8 | 71.9 |
| | MMAP(°C) | 57.7 | 52.9 | 60.3 | 56.6 |

Referring to the Table 1, it can be confirmed that the hydrogenated dicyclopentadiene based resins of Examples 1 to 4, due to soybean oil, had higher molecular weights compared to the existing petroleum resin, and met equivalent level of the properties including softening point, heating loss, DACP, MMAP, and the like, compared to commercial petroleum resin.

Further, referring to Fig. 1 and Fig. 2, it can be confirmed that the EVA hot melt adhesive and mPO hot melt adhesive manufactured with the resins of Examples 1 to 4 exhibited equivalent or superior heat resistance, compared to the existing commercial petroleum resin. However, it was confirmed that in Comparative Examples 3 to 8 wherein soybean oil was not copolymerized but mixed with commercial petroleum resin, and Comparative Examples 9 to 12 wherein hydrogenated soybean oil was mixed with commercial petroleum resin, heat resistance was degraded to the contrary.

## Claims

1. Hydrogenated dicyclopentadiene based resin obtained by polymerization of a monomer mixture comprising dicyclopentadiene and vegetable oil, and hydrogenation.

2. The hydrogenated dicyclopentadiene based resin according to claim 1, wherein the vegetable oil is represented by the following Chemical Formula 1: 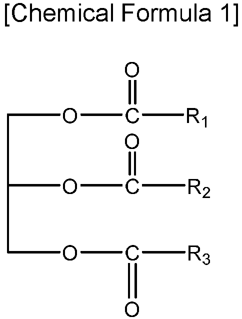 in the Chemical Formula 1,
R₁ to R₃ are each independently, C5-20 alkyl, and at least one of the R₁ to R₃ comprises one or more carbon-carbon double bonds.

3. The hydrogenated dicyclopentadiene based resin according to claim 1 or claim 1, wherein the content of the vegetable oil in the monomer mixture is 5 wt% to 20 wt%.

4. The hydrogenated dicyclopentadiene based resin according to any one of claims 1 to 3, wherein the monomer mixture comprises dicyclopentadiene and vegetable oil at a weight ratio of 19:1 to 3:1.

5. The hydrogenated dicyclopentadiene based resin according to any one of claims 1 to 4, wherein the vegetable oil has an unsaturated fatty acid content of 60 wt% to 90 wt%, in fatty acid.

6. The hydrogenated dicyclopentadiene based resin according to any one of claims 1 to 5, wherein the hydrogenated dicyclopentadiene based resin has an oxygen content of 0.1 wt% to 5 wt%.

7. The hydrogenated dicyclopentadiene based resin according to any one of claims 1 to 6, wherein the hydrogenated dicyclopentadiene based resin has a softening point of 70 °C to 120 °C.

8. The hydrogenated dicyclopentadiene based resin according to any one of claims 1 to 7, wherein the hydrogenated dicyclopentadiene based resin has heating loss of 3.5% or less.

9. The hydrogenated dicyclopentadiene based resin according to any one of claims 1 to 8, wherein the hydrogenated dicyclopentadiene based resin has a diacetone alcohol cloud point of 105 °C or less, and mixed methylcyclohexane-aniline point of 75 °C or less.

10. A method for preparing hydrogenated dicyclopentadiene based resin comprising steps of:
subjecting a monomer mixture comprising dicyclopentadiene and vegetable oil to thermal polymerization to prepare polymerized dicyclopentadiene based resin; and
subjecting the polymerized dicyclopentadiene based resin to hydrogenation.

11. The method for preparing hydrogenated dicyclopentadiene based resin according to claim 10, wherein in the monomer mixture, the content of dicyclopentadiene is 80 to 95 wt%, and the content of vegetable oil is 5 wt% to 20 wt%.

12. The method for preparing hydrogenated dicyclopentadiene based resin according to claim 10 or claim 11, wherein the step of preparing the polymerized dicyclopentadiene based resin comprises:
a first polymerization stage wherein the monomer mixtures is subjected to thermal polymerization in a continuous stirred tank reactor (CSTR); and
a second polymerization stage wherein the reaction product of the first stage polymerization is subjected to thermal polymerization in a plug flow reactor (PFR).

13. A composition for tackifier or adhesive comprising the hydrogenated dicyclopentadiene based resin according to any one of claims 1 to 9.
